Europäisches Patentamt

(19) **European Patent Office**

Office européen des brevets

(11) Veröffentlichungsnummer: **0 192 791**
**B1**

(12) **EUROPÄISCHE PATENTSCHRIFT**

(45) Veröffentlichungstag der Patentschrift:
25.01.89

(51) Int. Cl.⁴: **F 16 L 37/00**

(21) Anmeldenummer: **85102138.6**

(22) Anmeldetag: **27.02.85**

(54) **Kupplung für Druckleitungen.**

(43) Veröffentlichungstag der Anmeldung:
03.09.86 Patentblatt 86/36

(45) Bekanntmachung des Hinweises auf die Patenterteilung:
25.01.89 Patentblatt 89/4

(84) Benannte Vertragsstaaten:
**DE FR GB IT**

(56) Entgegenhaltungen:
EP-A-0 132 673
DE-A-2 922 869
DE-A-3 235 059
DE-A-3 313 859

(73) Patentinhaber: **Johannes Schäfer vormals Stettiner Schraubenwerke GmbH & Co. KG, Postfach 88, D-6303 Hungen (DE)**

(72) Erfinder: **Funk, Hans Georg, Ing. grad., Am Pfahlgraben 4, D-6303 Hungen 1 (DE)**
Erfinder: **Neumann, Frank, Ing. grad., Limesstrasse 9, D-6303 Hungen 1 (DE)**
Erfinder: **Schäfer, Dankmar, Dipl. Ing., Stettiner Strasse 57, D-6303 Hungen 1 (DE)**

(74) Vertreter: **Schlee, Richard, Dipl.- Ing., Bismarckstrasse 43, D-6300 Giessen 1 (DE)**

## Beschreibung

Die Erfindung bezieht sich auf eine Kupplung für eine Druckleitung, insbesondere für den Anschluß von Druckluftleitungen an Organe einer Druckluftbremse eines Kraftfahrzeuges, mit eihem Steckteil mit Durchgangsbohrung, einem Aufnahmeteil mit Durchgangsbohrung und Außengewinde, das in ein Gewindeloch einschraubbar ist und einem elastisch spreizbaren, am Aufnahmeteil angeordneten und in axialer Richtung formschlüssig an diesem fixierten Haltering aus Metallblech, der in eine Außennut des Steckteiles eingreift und dadurch diese Teile in axialer Richtung relativ zueinander fixiert, wobei der Haltering, gesehen in Einsteckrichtung, am vorderen Ende des Aufnahmeteiles angeordnet ist, mit einem Haltebereich von außen auf einem gewindelosen, rohrförmigen Fortsatz am vorderen Ende des Einschraubbereiches befestigt ist und mit Haltefingern das freie Ende des Fortsatzes übergreift, die radial nach innen über den Rand der Aufnahmebohrung derart hinausstehen, daß sie in gekuppeltem Zustand in eine Außennut am vorderen Ende des Steckteiles eingreifen und einen vorderen Bereich haben, der mit einer Anlagefläche endet, die an der vorderen Wand der Aussennut des Steckteiles anliegt.

Bei einer bekannten Kupplung dieser Art (JP-A-59/58295) hat der Haltering zwei Haltefinger, die diametral zueinander angeordnet sind. Die Haltefinger haben über ihre gesamte Länge eine gleichbleibende Breite. So beschaffene Halteringe können so große axiale Kräfte aufnehmen, daß gegen Axialbeanspruchungen eine vielfache Sicherheit besteht. Bei Drehschwingungen zwischen Aufnahmeteil und Steckteil besteht jedoch eine gewisse Gefahr, daß sich die Haltefinger mit ihren Anlagekanten in das Material des Steckteiles einfressen.

Der Erfindung liegt die Aufgabe zugrunde, eine Kupplung der genannten Art so zu verbessern, daß eine hohe Standfestigkeit auch bei Beanspruchung durch Drehschwingungen erreicht wird.

Diese Aufgabe wird nach der Erfindung dadurch gelöst, daß die Haltefinger einen relativ schmalen hinteren Bereich und einen breiteren vorderen Bereich haben, der mit der Anlagefläche endet und daß mindestens drei Haltefinger vorgesehen sind.

Bei einer solchen Ausbildung des Halteringes ist die spezifische Pressung zwischen Haltering und Steckteil relativ gering, wodurch die Gefahr eines Einfressens des Halteringes in den Steckteil vermindert ist. Die Steckkraft wird dennoch in Grenzen gehalten, da erfindungsgemäß die Haltefinger einen relativ schmalen hinteren Bereich aufweisen, der sich leicht biegen läßt. Die vergrößerte Anlagefläche zwischen Haltering und Steckteil wird also nicht mit einer unzuträglich großen Einsteckkraft erkauft.

Eine vorteilhafte Formgebung für die Haltefinger ist in den Ansprüchen 2 bis 4 angegeben. Eine maximale Anlagefläche erhält man, wenn gemäß Anspruch 5 nur noch kleine Zwischenräume zwischen den Haltefingern vorgesehen werden, nämlich Zwischenräume, die eben noch ausreichend sind, um das Federn der Haltefinger zu gewährleisten. Auch bei dem verbesserten Haltering ist dieser C-förmig ausgebildet, hat also eine große Öffnung, die ein seitliches Einschieben in die Außennut des Steckteiles ermöglicht (Anspruch 6). Bei einem solchen Haltering lassen sich besonders vorteilhaft vier Haltefinger verwenden (Anspruch 7). Zweckmäßig ist es, den relativ schmalen hinteren Bereich, der den Federweg hauptsächlich ausführen soll, in dem im Anspruch 8 angegebenen Bereich vorzusehen, wenn ein Haltering mit Haltefingern verwendet wird, die einen kegelförmigen Abschnitt aufweisen.

Zur weiteren Vorbeugung gegen ein Festfressen der Haltefinger ist gemäß Anspruch 9 eine Beschichtung der Haltefinger mit Kunststoff vorgesehen. Kunststoff kann auf Metall leichter gleiten als Metall auf Metall. Die Gleiteigenschaften werden noch verbessert durch die Aufnahme von Feuchtigkeit aus dem im System strömenden Strömungsmittel, im allgemeinen Druckluft.

Zur weiteren Verbesserung der Standfestigkeit ist gemäß Anspruch 10 vorgesehen, daß die Haltefinger an den Innenseiten ihrer vorderen Endbereiche so geformt sind, daß die Vorderkanten der Haltefinger mit der Verjüngungsfläche nicht in Berührung kommen können. Dadurch ist die Gewähr gegeben, daß die Haltefinger sicher in die Außennut des Steckteiles einrasten. Eine besonders vorteilhafte Formgebung, mit der dies erreicht wird, ist in den Ansprüchen 11 bis 15 angegeben.

Gemäß einer weiteren Verbesserung ist vorgesehen (Anspruch 15), daß die Außennut des Steckteiles eine Abstützfläche für die kegelförmigen Abschnitte der Haltefinger aufweist, die bei nicht deformierten Haltefingern einen Abstand von den kegelförmigen Abschnitten hat. Hierdurch wird erreicht, daß auch bei einer übergroßen Axialbeanspruchung, bei der die Haltefinger nach innen einknicken könnten, der Zusammenhalt der Kupplung gewährleistet ist. Die Haltefinger nämlich können nur so weit nach innen gebogen werden, bis sie sich an die Abstützfläche angelegt haben. Bevor eine solche unnormale Deformation eintritt, bleibt die Elastizität des Halteringes erhalten, da elastische Bewegungen nicht durch Anlage an der Abstützfläche behindert werden. Eine besonders einfache Abstützfläche hat die Form einer Kegelfläche (Anspruch 16). Vorzugsweise ist zu einem sicheren Eingriff des Halteringes an diesem, wie an sich bekannt, ein vorderer zylindrischer Abschnitt vorgesehen, der am Nutgrund anliegt (Anspruch 17).

Gemäß einer weiteren Ausgestaltung der Erfindung (Anspruch 18) ist vorgesehen, daß mit geringem Abstand vom vorderen Ende des Aufnahmeteiles ein Dichtring angeordnet ist, der den Spalt zwischen der Aufnahmebohrung des Aufnahmeteiles und der Umfangsfläche des Stützteiles abdichtet, vorzugsweise ein O-Ring, der in einer Nut des Steckteiles liegt. Dadurch kann der Austritt von Schmiermittel verhindert werden, das sich im Bereich der Aufnahmebohrung des Aufnahmeteiles und der Außenfläche des Steckteiles befindet. Solches Schmiermittel erleichtert Drehbewegungen, wodurch Metallabrieb bei Drehschwingungen und ein eventuelles Festfressen vermieden wird. Auch verhindert der Dichtring das Eindringen von Verunreinigungen aus dem Druckmedium zwischen Aufnahmeteil und Steckteil. Am hinteren Ende ist vorzugsweise eine Dichtkammer mit Dichtring vorgesehen (Anspruch 20). Schmiermittel wird zwischen dieser hinteren und der genannten vorderen Dichtung sicher festgehalten.

Vorzugsweise ist die Konstruktion gemäß Anspruch 21 beschaffen, so daß der Haltering bei eingeschraubtem Zustand des Aufnahmeteiles gegen ein unerwünschtes Lösen gesichert ist. In der Zeichnung ist ein Ausführungsbeispiel der Erfindung dargestellt. Es zeigen:

Fig. 1   einen diametralen Schnitt durch eine Kupplung für Druckleitungen im gekuppelten Zustand,

Fig. 2   einen vergrößerten Ausschnitt aus Fig. 1 im Bereich des strichpunktierten Rahmens II in Fig. 1 bei einem Zustand kurz vor dem Einrasten der Kupplung,

Fig. 3   eine Ansicht eines in der Kupplung verwendeten Halteringes in Richtung des Pfeiles III in Fig. 2 und,

Fig. 4   einen Querschnitt durch den Haltering entsprechend der Schnittlinie IV-IV in Fig. 3.

Die insgesamt mit K bezeichnete Kupplung hat einen Aufnahmeteil A, in den ein Steckteil S eingesteckt ist. Der Aufnahmeteil A ist in ein Gehäuse G eingeschraubt, das z. B. ein Bauelement einer Druckluft-Bremsanlage für ein Kraftfahrzeug ist. An den Steckteil S ist eine Schlauchleitung L angeschlossen.

Der Aufnahmeteil A hat einen Flansch 1, der außen Schlüsselflächen 2 hat, z. B. einen Sechskant. Der Flansch liegt auf einer Fläche 3 des Gehäuses G auf. An der Unterseite des Flansches 2 befindet sich eine Rille 4, in der ein Dichtring 5 aufgenommen ist, die von dem Flansch 1 fest gegen die Fläche 3 gedrückt wird.

Der Aufnahmeteil A hat ein Außengewinde 6, das in ein Innengewinde 7 des Gehäuses G eingeschraubt ist. Unterhalb des Gewindes 6 befindet sich im Aufnahmeteil A eine Außennut 8, in die ein insgesamt mit H bezeichneter Haltering eingreift.

Der Aufnahmeteil A enthält eine mehrfach abgestufte Aufnahmebohrung 9. Die Aufnahmebohrung hat einen langen vorderen Abschnitt 9a, eineh nach hinten daran anschließenden kürzeren Abschnitt 9b, der einen größeren Durchmesser als der Abschnitt 9a hat, einen nach hinten an den Abschnitt 9b anschließenden kurzen kegelförmigen Abschnitt 9c, einen daran nach hinten anschließenden kurzen zylindrischen Abschnitt 9d und einen an diesen nach hinten anschließenden hohlkegeligen Abschnitt 9e. Zwischen den Abschnitten 9d und 9e befindet sich eine Schulter 9f.

Der Steckteil S ist ein rohrförmiges Gebilde und enthält eine glatte Bohrung 10, die Bestandteil einer Druckmediumleitung ist. Am Steckteil befindet sich ein Flansch 11 mit Schlüsselflächen 12 an seinem Umfang, z. B. einem Sechskant. Hinter dem Flansch befinden sich an der Außenseite des Steckteiles Rippen 13 mit widerhakenförmigem Querschnitt, von denen in der Zeichnung nur eine dargestellt ist. Die Umfangsrippen 13 dienen zum Festhalten des Schlauches L. Unterhalb des Flansches 11 befindet sich ein elastischer Dichtring 14, der auf der Schulter 9f im Aufnahmeteil A aufliegt und in axialer Richtung elastisch zusammengepreßt ist, so daß er den Steckteil S gegenüber dem Aufnahmeteil A axial verspannt.

In den Abschnitt 9b der Aufnahmebohrung 9 greift ein ringförmiger Vorsprung 15 des Steckteiles ein, in dem sich eine Ringnut 16 befindet, die einen elastischen Dichtring 17 (O-Ring) aufnimmt, der ein großes Volumen hat.

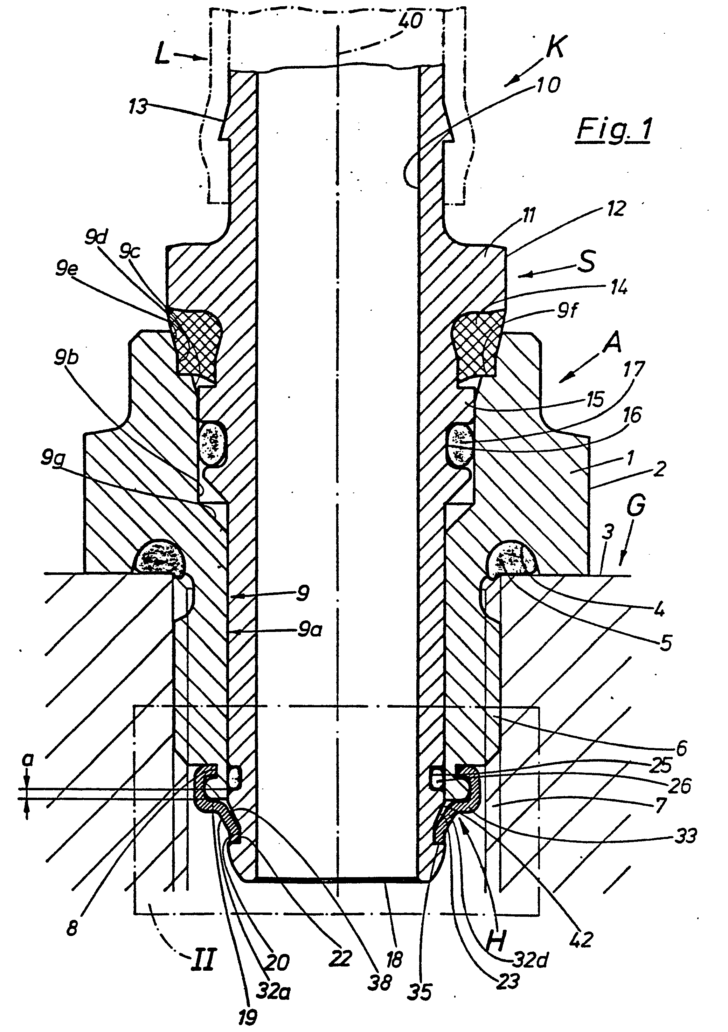

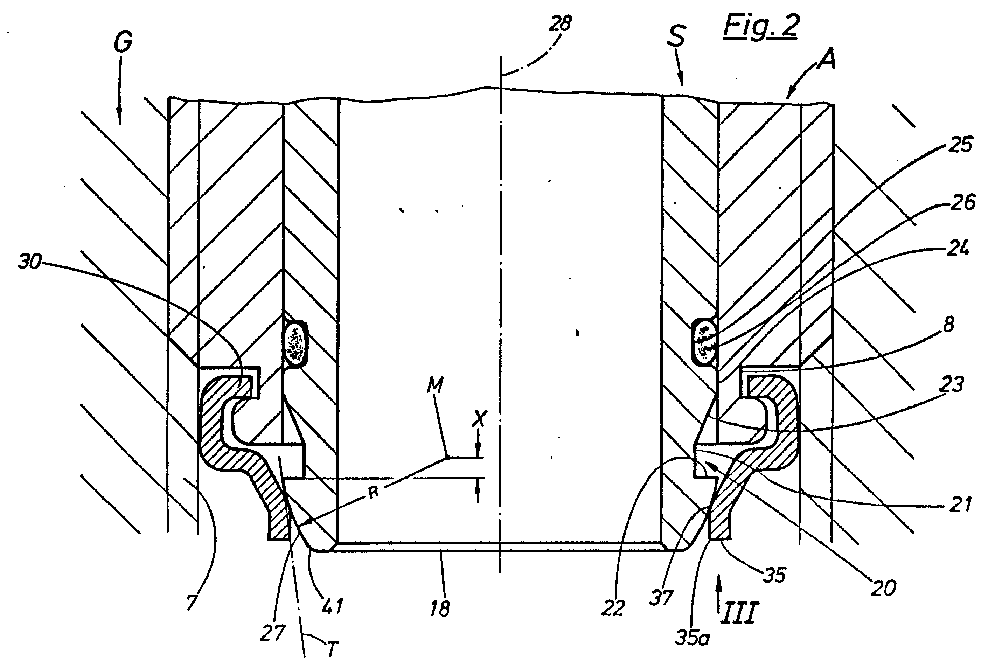

Im gekuppelten Zustand (Zustand nach Fig. 1) ragt das vordere Ende 18 des Steckteiles S über das vordere Ende 19 des Aufnahmeteiles A vor. In dem vorragenden Teil befindet sich eine Außennut 20, deren Form nachfolgend anhand der Fig. 2 beschrieben wird. Die Außennut 20 hat einen zylindrischen Nutgrund 21 und eine vordere ebene Nutwand 22, sowie eine hintere kegelförmige Nutwand 23. Die kegelige Nutwand 23 geht in eine zylindrische Außenfläche 24 des Steckteiles über, die passend in den Abschnitt 9a der Aufnahmebohrung 9 paßt.

In geringem Abstand von der Nut 20 befindet sich am Steckteil S eine weitere Ringnut 25, in der ein elastischer Dichtring 26, nämlich ein O-Ring, aufgenommen ist. Im vollständig gekuppelten Zustand (Fig. 1) befindet sich der Dichtring 26 nahe beim vorderen Ende 19 des Aufnahmeteiles A. Der Abstand a zwischen dem vorderen Ende 19 und der vom Dichtring 26 ausgefüllten Nut 25 ist nur so groß, daß die Nut 25 mit Sicherheit abgeschlossen ist, z. B. ist dieser Abstand 0,3 mm.

An die Nutwand 22 schließt nach vorne hin eine torusförmige Verjüngungsfläche 27 an. Der Mittelpunkt M des Radius R der Verjüngungsfläche 27 liegt hinter der vorderen Nutwand 22. Die Versetzung ist durch das Maß x angedeutet. Dadurch ist gewährleistet, daß die Tangente T an die Torusfläche 27 an der Stelle des Oberganges in die Nutwand 27 von einer zu der Achse 28 parallelen Lage abweicht. Am vorderen Ende der Verjüngungsfläche 27 ist eine Abrundung 41 mit relativ kleinem Radius vorgesehen.

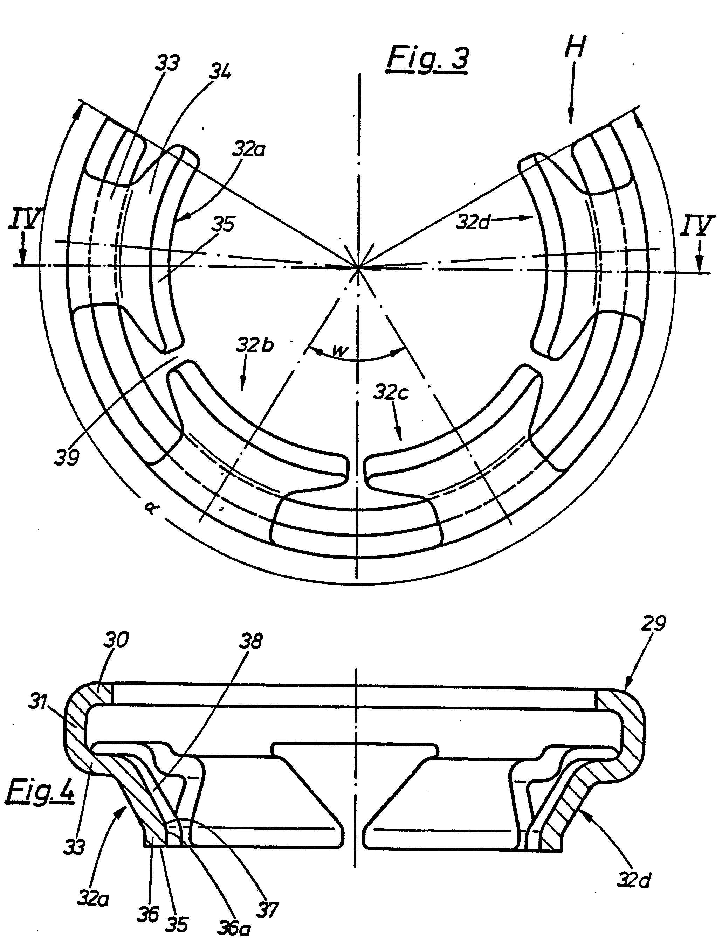

Im folgenden wird der Haltering H anhand der Fig. 3 und 4 betrachtet. Wie Fig. 3 zeigt, ist der Haltering H nicht geschlossen, sondern hat eine C-Form. Der Umfangswinkel α beträgt z. B. 240 Winkelgrade und ist so groß gewählt, daß sich der Ring so weit aufspreizen läßt, daß er, in den Fig. 1 und 2 gesehen, mit einer Bewegung quer zur Zeichenebene, in die Außennut 8 des Aufnahmeteiles A einschiebbar ist.

Die C-Form ist in einem Tragbereich 29 zusammenhängend. Der Tragbereich 29 hat einen winkelförmigen Querschnitt mit einem Schenkel 30, der für den Eingriff in die Außennut 8 des Aufnahmeteiles A bestimmt ist und einen dazu rechtwinkligen Schenkel, der der Querschnitt einer zylindrischen Fläche ist, während der Schenkel 30 der Querschnitt einer ringförmigen ebenen Fläche ist.

Von dem Schenkel 31 gehen insgesamt vier Halterfinger 32a bis 32d aus. Alle Haltefinger sind gleich beschaffen. Die Form wird am Beispiel des Haltefingers 32a beschrieben. Der Haltefinger hat einen hinteren relativ schmalen Bereich 33 und einen vorderen breiteren Bereich 34. Die Breite des Bereiches 34 nimmt ausgehend vom schmalen Bereich 33 nach vorne hin zu und endet mit einer Anlagefläche 35, die fast doppelt so breit ist wie der schmale Bereich 33.

Der Bereich 33 ist im wesentlichen eben (siehe Fig. 4), während der Bereich 34 im wesentlichen Teil eine Kegelfläche ist. Am vorderen Ende jedoch hat der Haltefinger 34 einen kurzen zylindrischen Teil 36, der über eine Abrundung 37 in die Hohlkegelfläche 38 übergeht und eine zylindrische Innenfläche 36a aufweist.

Die Haltefinger 32a bis 32d sind so nahe aneinandergerückt, daß zwischen benachbarten Haltefingern ein nur kleiner Abstand 39 verbleibt, der eben ausreicht, um eine freie Bewegung jedes einzelnen Haltefingers zu ermöglichen. Der Zwischenraum 39 kann z. B. eine Breite von 0,5 mm aufweisen. Der Haltering ist vorzugsweise ein Stanzteil. Die Anlagefläche 35 kann geschliffen sein, um eine gute Auflage auf der Nutwand 22 zu gewährleisten.

Der Winkelabstand w zwischen benachbarten Haltefingern beträgt bei der gezeichneten Ausführungsform 64 Winkelgrade. Die Anlagefläche 35 erstreckt sich annähernd über einen gesamten Teilungsabstand, nämlich über 58 Winkelgrade.

Der gesamte Haltering H ist mit Kunststoff beschichtet, was jedoch in der Zeichnung maßstäblich nicht darstellbar ist, da die Beschichtung außerordentlich dünn ist. Der gesamte Haltering ist mit der Kunststoffschicht überzogen.

Bei der Montage der Kupplung wird vor dem Einschrauben des Aufnahmeteiles A in das Innengewinde 7 der Haltering H durch Quereinschieben in die Außennut 8 befestigt. In die Nut 4 wird der Dichtring 5 eingelegt und dann der Aufnahmeteil A eingeschraubt, wobei der Dichtring 5 komprimiert wird. Am Steckteil S werden die Dichtringe 14, 17 und 26 befestigt, bevor der Steckteil S eingesteckt wird. Danach erfolgt das Einführen durch eine Bewegung längs der Achse 40, wobei zuerst der Dichtring 26 mit dem Bohrungsabschnitt 9a in Berührung kommt. Die hierzu nötige Kompression des Dichtringes 26 erfolgt an der Kegelfläche 9g, an der die Bohrungsabschnitte 9a und 9b ineinander übergehen. Beim weiteren Vorschieben gelangt der großvolumige Dichtring 17 in den Bohrungsabschnitt 9b. Die hierzu nötige Kompression des Dichtringes erfolgt an der Kegelfläche 9c. Zuletzt gelangt der Dichtring 14 in den Bohrungsabschnitt 9d. Seine Kompression wird durch den kegeligen Abschnitt 9e erleichtert.

Kurz vor dem Einrasten der Kupplung ist die Situation nach Fig. 2 erreicht. In dieser Situation ist der Haltering H etwas gespreizt, nämlich so weit, bis er an den Kanten der Gewindegänge des Innengewindes 7 des Gehäuses G aufliegt. Danach verhindert die Gewindebohrung eine weitere Aufspreizung. Der Schenkel 30 greift hierbei noch in die Außennut 8 ein.

Die Verjüngungsfläche 27 drückt die Haltefinger 32a bis 32d elastisch nach außen, wobei die Abrundung 37 jedes Haltefingers auf der Torusfläche 27 entlanggleitet. Schließlich wird die Situation erreicht, daß die Nutwand 22 auf der Höhe der Anlageflächen 35 liegt. Die elastischen Kräfte der Haltefinger bewirken dann ein Vorspringen der Haltefinger nach innen, wonach sie die in Fig. 1 dargestellte Lage einnehmen. Die Anlageflächen 35 liegen nun satt auf der Nutwand 22 auf. Die Kegelfläche 23 ist schlanker als die Hohlkegelflächen 38 an den Haltefinger 32a bis 32d, so daß diese Hohlkegelflächen 38 einen gewissen Abstand von der Kegelfläche 23 haben, weshalb zwischen diesen Flächen der in Fig. 1 sichtbare Zwischenraum 42 besteht.

Durch die Abrundung 37 wird verhindert, daß sich die Innenkanten 35a auf der Verjüngungsfläche 37 verhaken können. Hierdurch könnte ein Einrasten der Kupplung vorgetäuscht werden, was zu einer falschen Montage führen könnte. Eine solche falsche Montage wird durch die beschriebene Formgebung verhindert.

Bei einer übermäßigen axialen Beanspruchung können die Haltefinger 32 nur wenig deformiert werden, da sie schon nach geringer Deformation an der Kegelfläche 23 eine Abstützung finden, so daß ein Zusammenknicken der Haltefinger sicher vermieden wird. Diese zusätzliche Sicherung steht auch im Zusammenhang damit, daß die Haltefinger zur Erleichterung des Auffederns der Haltefinger einen schmalen hinteren Bereich 33 haben, wodurch die Gefahr des Einknickens etwas größer ist als bei Haltefingern, die durchgehend gleich breit sind.

Zur Trennung der Kupplung wird der Aufnahmeteil A aus dem Gehäuse G herausgeschraubt. Danach kann der Haltering H durch Verschieben parallel zur Ebene, in der die Ringnut 8 liegt, aus dieser herausgezogen werden, wobei auch die Haltefinger 32a bis 32d aus der Außennut 20 des Steckteiles herausgleiten. Nach Entfernung des Halteringes läßt sich der Steckteil herauszeihen. Ein zufälliges Loslösen des Halteringes im gekuppelten Zustand ist bei eingeschraubtem Aufnahmeteil A nicht möglich, da sich der Haltering wegen der entsprechenden Abstimmung des Innendurchmessers des Gewindes 7 auf den Außendurchmesser des Halteringes H und die Tiefe der Außennut 8 nicht so weit aufweiten läßt, daß der Ring aus der Außennut 8 austreten kann. Auch ein Austreten der Haltefinger 32 aus der Nut 20 kann nicht eintreten.

Die verbesserte Kupplung ist besonders widerstandsfähig auch bei Beanspruchung durch Drehschwingungen, was bereits in der Beschreibungseinleitung erläutert ist. Schmiermittel befindet sich zwischen den Dichtungen 26 und 27 und wird durch diese Dichtungen sicher am Austreten gehindert. Bei der Montage der Kupplung wird der Steckteil eingefettet, so daß sich im Bereich des Abschnittes 9a der Aufnahmebohrung Schmiermittel befindet.

**Patentansprüche**

1. Kupplung (K) für eine Druckleitung, insbesondere für den Anschluß von Druckluftleitungen an Organe einer Druckluftbremse eines Kraftfahrzeuges, mit einem Steckteil (S) mit Durchgangsbohrung (10), einem Aufnahmeteil (A) mit Durchgangsbohrung (9) und Außengewinde (6), das in ein Gewindeloch (7) einschraubbar ist und einem elastisch spreizbaren, am Aufnahmeteil (A) angeordneten und in axialer Richtung formschlüssig an diesem fixierten Haltering (H) aus Metallblech, der in eine Außennut (20) des Steckteiles (S) eingreift und dadurch diese Teile (A, S) in axialer Richtung relativ zueinander fixiert, wobei der Haltering (H), gesehen in Einsteckrichtung, am vorderen Ende des Aufnahmeteiles (A) angeordnet ist, mit einem Haltebereich (29) von außen auf einem gewindelosen, rohrförmigen Fortsatz am vorderen Ende des Einschraubbereiches befestigt ist und mit Haltefingern (32a bis 32d) das freie Ende des Fortsatzes übergreift, die radial nach innen über den Rand der Aufnahmebohrung (9) derart hinausstehen, daß sie in gekuppeltem Zustand in die Außennut (20) am vorderen Ende des Steckteiles (S) eingreifen und einen vorderen Bereich haben, der mit einer Anlagefläche endet die an der vorderen Wand (22) der Außennut (20) des Steckteiles (S) anliegt, dadurch gekennzeichnet, daß die Haltefinger (32a bis 32d) einen relativ schmalen hinteren Bereich (33) und einen breiteren vorderen Bereich (34) haben, der mit der Anlagefläche (35) endet und daß mindestens drei Haltefinger vorgesehen sind.

2. Kupplung nach Anspruch 1, dadurch gekennzeichnet, daß sich der vordere Bereich (34), ausgehend von der Anlagefläche (35) zum hinteren Bereich (33) kontinuierlich verjüngt.

3. Kupplung nach einem der vorhergehenden Ansprüche, dadurch gekennzeichnet, daß der hintere Bereich (33) über seine gesamte Länge eine etwa gleichbleibende Breite hat.

4. Kupplung nach einem der vorhergehenden Ansprüche, dadurch gekennzeichnet, daß das Verhältnis zwischen der Breite des hinteren Bereiches (33) zur Länge der Anlagefläche (35) im Bereich von 1 : 1,2 bis 1 : 2,5 liegt, vorzugsweise ca. 1 : 1,7 beträgt.

5. Kupplung nach einem der vorhergehenden Ansprüche, dadurch gekennzeichnet, daß die Haltefinger (32a bis 32d) im Bereich der Anlageflächen (35) einen Abstand (39) im Bereich von 0,2 mm bis 1 mm, vorzugsweise von ca. 0,5 mm aufweisen.

6. Kupplung nach einem der vorhergehenden Ansprüche, dadurch gekennzeichnet, daß der Teilungsabstand (w) der Haltefinger (32a, 32d) im Bereich von 45 bis 120 Winkelgraden liegt, vorzugsweise ca. 64 Winkelgrade beträgt.

7. Kupplung nach Anspruch 6, gekennzeichnet durch vier Haltefinger (32a bis 32d).

8. Kupplung nach einem der vorhergehenden Ansprüche, bei der der Haltering (H) einen zusammenhängenden C-förmigen Tragbereich (29) von winkelförmigem Querschnitt aufweist, der einen ebenen Eingreifbereich (30) für den Eingriff in eine Außennut (8) am Aufnahmeteil (A) und einen zylindrischen Bereich (31) aufweist, von dem die Haltefinger (32a bis 32d) ausgehen und die Haltefinger einen ersten Abschnitt (33), der etwa parallel zum Eingreifbereich (30) ist, sowie einen zweiten, etwa kegelförmigen Abschnitt (38) aufweisen, an dessen Ende sich die Anlagefläche (35) befindet, dadurch gekennzeichnet, daß der hintere Bereich (33) jedes Haltefingers (32a bis 32d) durch den ersten Abschnitt (33) und der vordere Bereich (34) durch den zweiten Abschnitt (38) gebildet ist.

9. Kupplung nach einem der Ansprüche 1 bis 8, dadurch gekennzeichnet, daß mindestens Anlageflächen (35), die an der vorderen Wand (22) der Außennut (20) des Steckteiles (S) anliegen, vorzugsweise der gesamte Haltering (H), mit Kunststoff beschichtet ist, z. B. mit einem Polyamid oder mit Tetrafluoräthylen, wobei die Dicke der Kunststoffschicht vorzugsweise im Bereich von 70 bis 150 μ liegt.

10. Kupplung nach Anspruch 1, insbesondere mit einem Steckteil (S), das sich ausgehend von seiner Außennut (20) zu seinem vorderen Ende hin kontinuierlich verjüngt, dadurch gekennzeichnet, daß die Haltefinger (32a bis 32d) an den Innenseiten (38, 37) ihrer vorderen Endbereiche so geformt sind, daß die Vorderkante (35a) der Haltefinger (32a bis 32d) mit der Verjüngungsfläche (27) nicht in Berührung kommen kann.

11. Kupplung nach Anspruch 10, gekennzeichnet durch eine Abrundung (37) an der Innenseite jedes Haltefingers (32a bis 32d), an der beim Einschieben des Steckteiles (S) dessen Verjüngungsfläche (27) entlanggleitet.

12. Kupplung nach Anspruch 11, dadurch gekennzeichnet, daß an die Abrundung (37) nach vorne eine zylindrische Fläche (36a) anschließt.

13. Kupplung nach einem der Ansprüche 10 bis 12, dadurch gekennzeichnet, daß die Verjüngungsfläche (27) an ihrem vorderen Ende abgerundet ist (Abrundung 41).

14. Kupplung nach einem der Ansprüche 10 bis 13, dadurch gekennzeichnet, daß die Verjüngungsfläche (27) insgesamt als Kugelfläche oder Torusfläche ausgebildet ist, wobei der Mittelpunkt (M) des Krümmungsradius (R) der Kugelfläche oder Torusfläche hinter der Nutwand (22) liegt, an der sich die Haltefinger (32a bis 32d) abstützen.

15. Kupplung nach einem der Ansprüche 1 bis 14, insbesondere mit einem Haltering (H), der einen zusammenhängenden T-förmigen Tragbereich (29) von winkelförmigem Querschnitt aufweist, der einen ebenen Eingreifbereich (30) für den Eingriff in eine Außennut (8) am Aufnahmeteil (A) und einen zylindrischen Bereich (31) aufweist, von dem die Haltefinger (32a bis 32d) ausgehen und die Haltefinger einen ersten Abschnitt (33), der etwa parallel zum Eingreifbereich (30) ist, sowie einen zweiten, etwa kegelförmigen Abschnitt (38) aufweisen, an dessen Ende sich die Anlagefläche (35) befindet, dadurch gekennzeichnet, daß die Außennut (20) des Steckteiles (S) eine Abstützfläche (23) für die kegelförmigen Abschnitt (38) der Haltefinger (32a bis 32d) aufweist, die bei nicht deformierten Haltefingern einen Abstand (42) von den kegelförmigen Abschnitten (38) hat.

16. Kupplung nach Anspruch 15, dadurch gekennzeichnet, daß die Außennut (20) des Steckteiles (S) einen zylindrischen Nutgrund (21) aufweist, an den nach hinten eine Kegelfläche (23) anschließt, deren Kegelwinkel kleiner ist als der Kegelwinkel der kegelförmigen Abschnitte (38) der Haltefinger (32a bis 32d).

17. Vorrichtung nach Anspruch 16, dadurch gekennzeichnet, daß an der kegeligen Fläche (38) jedes Haltefingers (32a bis 32d) nach vorne eine zylindrische Fläche (36a) anschließt, die auf dem zylindrischen Teil (21) des Grundes der Außennut (20) des Steckteiles (S) aufliegt.

18. Kupplung nach einem der Ansprüche 1 bis 17, dadurch gekennzeichnet, daß mit geringem Abstand (a) vom vorderen Ende (19) des Aufnahmeteiles (A) ein Dichtring (26) angeordnet ist, der den Spalt zwischen der Aufnahmebohrung (9) des Aufnahmeteiles (A) und der Umfangsfläche des Steckteiles (S) abdichtet, vorzugsweise ein O-Ring, der in einer Nut (25) des Steckteiles (S) liegt.

19. Kupplung nach Anspruch 18, dadurch gekennzeichnet, daß der Abstand (a) des Dichtringes (26) vom vorderen Ende (19) des Aufnahmeteiles (A) im Bereich von 0 mm bis 2 mm liegt, vorzugsweise ca. 0,5 mm beträgt.

20. Kupplung nach Anspruch 19, gekennzeichnet durch eine Dichtkammer, die sich im hinteren Bereich (9b) der Aufnahmebohrung (9) des Aufnahmeteiles (A) befindet und durch eine Erweiterung der Aufnahmebohrung (9) gebildet ist und die nach hinten durch eine Dichtung (17) abgedichtet ist, vorzugsweise durch einen O-Ring, der in einer Nut (16) des Steckteiles (S) liegt.

21. Kupplung nach einem der vorhergehenden Ansprüche, dadurch gekennzeichnet, daß in an sich bekannter Weise die Eingriffstiefe des Halteringes (H) in die Außennut (8) des Aufnahmeteiles (A) und der Kerndurchmesser am Außengewinde (6) des Aufnahmeteiles (A) so aufeinander abgestimmt sind, daß der Haltering (H) bei Aufweitung auf den Gewinde-Kerndurchmesser noch in die Außennut (8) eingreift und daß in dieser Spreizstellung auch die Haltefinger (32a bis 32d) noch in die Außennut (20) des Steckteiles (S) eingreifen.

**Claims**

1. A coupling (K) for a pressure line, particularly for connecting compressed-air lines to elements of a compressed-air brake of a motor vehicle, having a plug-in part (S) with a through bore (10), a receiving part (A) having a through bore (9) and an external screw-thread (6) which is screwable into a screw threaded hole (7), and a resiliently expandable retaining ring (H) made from sheet metal which is disposed in the receiving part (A) and fixed thereto in an axial direction in a positive manner and engages an external groove (20) in the plug-in part (S) and thereby fixes these parts (A, S) relative to one another in an axial direction, wherein the retaining ring (H) is disposed at the front end of the receiving part (A) when viewed in the plugin direction and is secured externally by means of a retaining region (29) to a non-threaded, tubular extension at the front end of the screw-in region, and overlaps the free end of the extension by means of retaining fingers (32a to 32d) which project radially inwardly beyond the edge of the receiving bore (9) in such a way that, in the coupled state, they engage the external groove (20) at the front end of the plug-in part (5), and which fingers have a front region which terminates with a contact surface which abuts against the front wall (22) of the external groove (20) of the plug-in part (5), characterised in that the retaining fingers (32a to 32d) have a relatively narrow rear region (33) and a wider front region (34) which terminates with the contact surface (35), and that at least three retaining fingers are provided.

2. A coupling as claimed in claim 1, characterised in that the front region (34) tapers continuously from the contact surface (35) to the rear region (33).

3. A coupling as claimed in any one of the preceding claims, characterised in that the rear region (33) has an approximately uniform width over its entire length.

4. A coupling as claimed in any one of the preceding claims, characterised in that the ratio of the width of the rear region (33) to the length of the contact surface (35) is in the range of from 1 : 1.2 to 1 : 2.5, preferably approximately 1 : 1.7.

5. A coupling as claimed in any one of the preceding claims, characterised in that the retaining fingers (32a to 32d) are spaced apart in the region of the contact surfaces (35) by a distance (39) in the range of from 0.2 mm to 1 mm, preferably approximately 0.5 mm.

6. A coupling as claimed in any one of the preceding claims, characterised in that the pitch spacing (w) between the retaining fingers (32a, 32d) is in the range of from 45 to 120 angular degrees, preferably approximately 64 angular degrees.

7. A coupling as claimed in claim 6, characterised by four retaining fingers (32a to 32d).

8. A coupling as claimed in any one of the preceding claims, in which the retaining ring (H) has a continuous C-shaped support region (29) of angular cross-section which has a planar engagement region (30) for engaging an external groove (8) in the receiving part (A) and a cylindrical region (31) from which the retaining fingers (32a to 32d) emanate, and the retaining fingers have a first portion (38) which is approximately parallel to the engagement region (30) and a second portion, approximately conical portion (38) at the end of which is located the contact surface (35), characterised in that the rear region (33) of each retaining finger (32a to 32d) is formed by the first portion (33), and the front region (34) is formed by the second portion (38).

9. A coupling as claimed in any one of claims 1 to 8, characterised in that at least contact surfaces (35) which abut against the front wall (22) of the external groove (20) of the plug-in part (S), preferably the entire retaining ring (H), are coated with plastics material such as a polyamide or tetrafluoroethylene, the thickness of the plastics coating being preferably in the range of from 70 to 150 μ.

10. A coupling as claimed in claim 1, particularly having a plug-in part (S) which tapers continuously from its external groove (20) to its front end, characterised in that the insides (38, 37) of the front end regions of the retaining fingers (32a to 32d) are shaped in such a way that the front edge (35a) of the retaining fingers (32a to 32d) cannot come into contact with the tapering surface (27).

11. A coupling as claimed in claim 10, characterised by a rounded portion (37) which is provided on the inside of each retaining finger (32a to 32d) and along which the tapering surface (27) of the plug-in part (S) slides when the latter is being inserted.

12. A coupling as claimed in claim 11, characterised in that a cylindrical surface (36a) is contiguous to the front of the rounded portion (37).

13. A coupling as claimed in any one of claims 10 to 12, characterised in that the tapering surface (27) is rounded at its front end (rounded portion 41).

14. A coupling as claimed in any one of claims 10 to 13, characterised in that the entire tapering surface (27) is a spherical surface or toroidal surface, wherein the centre point (M) of the radius (R) of curvature of the spherical surface or toroidal surface is located behind the groove wall (22) against which the retaining fingers (32a to 32d) abut.

15. A coupling as claimed in any one of claims 1 to 14, particularly having a retaining ring (H) having a continuous T-shaped support region (29) of angular cross-section which has a planar engagement region (30) for engaging an external groove (8) in the receiving part (A) and a cylindrical region (31) from which the retaining fingers (32a to 32d) emanate, and the retaining fingers have a first portion (33) which is approximately parallel to the engagement region (30) and a second, approximately conical portion (38) at the end of which is located the contact surface (35), characterised in that the external groove (20) of the plugin part (S) has a support surface (23) for the conical portion (38) of the retaining fingers (32a to 32d), which support surface is spaced from the conical portions (38) by the distance (42) when the retaining fingers are not deformed.

16. A coupling as claimed in claim 15, characterised in that the external groove (20) of the plug-in part (S) has a cylindrical base (21) to the rear of which is contiguous a conical surface (23) whose angle of taper is smaller than the angle of taper of the conical portions (38) of the retaining fingers (32a, 32d).

17. A device as claimed in claim 16, characterised in that a cylindrical surface (36a) is contiguous to the front of the conical surface (38) of each retaining finger (32a, 32d) and rests on the cylindrical part (21) of the base of the external groove (20) of the plug-in part (S).

18. A coupling as claimed in any one of claims 1 to 17, characterised in that a sealing ring (26) is disposed at a short distance (a) from the front end (19) of the receiving part (A) and seals the gap between the receiving bore (9) of the receiving part (A) and the circumferential surface of the plug-in part (S), which sealing ring is preferably an O-ring located in a groove (25) in the plug-in part (S).

19. A coupling as claimed in claim 18, characterised in that the distance (a) between the sealing ring (26) and the front end (19) of the receiving part (A) is in the range of from 0 mm to 2 mm, and is preferably approximately 0.5 mm.

20. A coupling as claimed in claim 19, characterised by a sealing chamber which is located in the rear region (9b) of the receiving bore (9) of the receiving part (A) and is formed by a widened portion of the receiving bore (9) and is sealed at the rear by a seal (17), preferably by an O-ring which is located in a groove (16) in the plug-in part (5).

21. A coupling as claimed in any one of the preceding claims, characterised in that, in a manner known per se, the depth of engagement of the retaining ring (H) into the external groove (8) of the receiving part (A) and the core diameter on the external thread (6) of the receiving part (A) are matched to one another in such a way that the retaining ring (H) still engages the external groove (8) when expanded to the core diameter of the thread, and that the retaining fingers (32a to 32d) also still engage the external groove (20) of the plug-in part (S) when the retaining ring is in this expanded position.

**Revendications**

1. Raccord (K) pour conduite sous pression, en particulier pour le raccordement de conduites d'air comprimé à des organes d'un frein pneumatique de véhicule automobile, comportant un élément mâle (S) à alésage de passage (10), un élément femelle (A) à alésage de passage (9) et filetage extérieur (6) se vissant dans un trou taraudé (7), et une bague de fixation en tôle métallique (H) dilatable élastiquement, placée sur l'élément femelle (A) et fixée à celui-ci dans la direction axiale par emboîtement, qui s'engage dans une gorge extérieure (20) de l'élément mâle (S) et fixe ainsi ces éléments (A, S) l'un par rapport à l'autre dans la direction axiale, cette bague de fixation (H) étant placée à l'extrémité avant, relativement à la direction d'introduction, de l'élément femelle (A), étant fixée de l'extérieur, par une partie de fixation (29), sur un appendice tubulaire non fileté prévu à l'extrémité avant de la zone de vissage, et coiffant l'extrémité libre de cet appendice par des doigts de fixation (32a à 32d) qui dépassent radialement vers l'intérieur du bord de l'alésage récepteur (9) de façon telle qu'à l'état accouplé, ils s'engagent dans la gorge extérieure (20) prévue à l'extrémité avant de l'élément mâle (S) et aient une partie avant qui se termine par une surface d'appui qui porte contre la paroi avant (22) de la gorge extérieure (20) de l'élément mâle (S), caractérisé en ce que les doigts de fixation (32a à 32d) ont une partie arrière (33) relativement étroite et une partie avant (34) plus large, qui se termine par la surface d'appui (35), et en ce qu'il est prévu au moins trois doigts de fixation.

2. Raccord selon la revendication 1, caractérisé en ce que la partie avant (34) se rétrécit de manière continue à partir de la surface d'appui (35) vers la partie arrière (33).

3. Raccord selon l'une des revendications précédentes, caractérisé en ce que la partie arrière (33) a une largeur à peu près constante sur toute sa longueur.

4. Raccord selon l'une des revendications précédentes, caractérisé en ce que le rapport de la largeur de la partie arrière (33) à la longueur de la surface d'appui (35) est compris entre 1/1,2, et 1/2,5 et de préférence d'environ 1/1,7.

5. Raccord selon l'une des revendications précédentes, caractérisé en ce que les doigts de fixation (32a à 32d) ont entre eux dans la zone des surfaces d'appui (35), un intervalle (39) de largeur compris entre 0,2 mm et 1,0 mm et de préférence environ 0,5 mm.

6. Raccord selon l'une des revendications précédentes, caractérisé en ce que le pas angulaire (w) des doigts de fixation (32a à 32d) est compris entre 45 et 120 degrés et de préférence d'environ 64 degrés.

7. Raccord selon la revendication 6, caractérisé par quatre doigts de fixation (32a à 32d).

8. Raccord selon l'une des revendications précédentes, dans lequel la bague de fixation (H) a une partie portante en C continue (29) de section coudée qui comporte une partie d'engagement plane (30) destinée à s'engager dans une gorge extérieure (8) de l'élément femelle (A) et une partie cylindrique (31) d'où partent les doigts de fixation (32a à 32d), et les doigts de fixation comportent une première partie (33) à peu près parallèle à la partie d'engagement (30) et une deuxième partie à peu près conique (38) à l'extrémité de laquelle se trouve la surface d'appui (35), caractérisé en ce que la partie arrière (33) de chacun des doigts de fixation (32a à 32d) est formée par ladite première partie (33) et la partie avant (34) formée par ladite deuxième partie (38).

9. Raccord selon l'une des revendications 1 à 8, caractérisé en ce qu'au moins des surfaces d'appui (35) qui s'appuient contre la paroi avant (22) de la gorge extérieure (20) de l'élément mâle (S), et de préférence toute la bague de fixation (H), sont revêtus de plastique, par exemple d'un polyamide ou de polytétrafluoréthylène, l'épaisseur de la couche de plastique étant de préférence comprise en 70 et 150 µm.

10. Raccord selon la revendication 1, en particulier comportant un élément mâle (S) qui se rétrécit de manière continue à partir de sa gorge extérieure (20) vers son extrémité avant, caractérisé en ce que les doigts de fixation (32a à 32d) sont façonnés, sur le côté intérieur (38, 37) de leurs parties extrêmes avant, de façon que leur arête avant (35a) ne puisse pas venir en contact avec la surface de rétrécissement (27).

11. Raccord selon la revendication 10, caractérisé en ce que le côté intérieur de chacun des doigts de fixation (32a à 32d) présente un arrondi (37) le long duquel glisse la surface de rétrécissement (27) de l'élément mâle (5) lors de l'introduction de celui-ci.

12. Raccord selon la revendication 11, caractérisé en ce qu'une surface cylindrique fait suite vers l'avant à l'arrondi (37).

13. Raccord selon l'une des revendications 10 à 12, caractérisé en ce que la surface de rétrécissement (27) est arrondie à son extrémité avant (arrondi 41).

14. Raccord selon l'une des revendications 10 à 13, caractérisé en ce que la surface de rétrécissement (27) est en totalité sphérique ou torique, le centre (M) du rayon de courbure (R) de la surface sphérique ou torique étant situé en arrière de la paroi de gorge (22) contre laquelle s'appuient les doigts de fixation (32a à 32d).

15. Raccord selon l'une des revendications 1 à 14, en particulier comportant une bague de fixation (H) qui a une partie portante en T continue (29) de section coudée qui comporte une partie d'engagement plane (30) destinée à s'engager dans une gorge extérieure (8) de l'élément femelle (A) et une partie cylindrique (31) d'où partent les doigts de fixation (32a à 32d), lesquels comportent une première partie (33) à peu près parallèle à la partie d'engagement (30) et une deuxième partie à peu près conique (38) à l'extrémité de laquelle se trouve la surface d'appui (35), caractérisé en ce que la gorge extérieure (20) de l'élément mâle (S) présente une surface d'appui (23) pour la partie conique (38) des doigts de fixation (32a à 32d), cette surface étant à une certaine distance (42) des parties coniques (38) lorsque les doigts de fixation ne sont pas déformés.

16. Raccord selon la revendication 15, caractérisé en ce que la gorge extérieure (20) de l'élément mâle (S) a un fond cylindrique (21) auquel fait suite vers l'arrière une surface conique (23) dont l'angle du cône est inférieur à l'angle du cône des parties coniques (38) des doigts de fixation (32a à 32d).

17. Raccord selon la revendication 16, caractérisé en ce que la surface conique (38) de chacun des doigts de fixation (32a à 32d) se raccorde vers l'avant à une surface cylindrique (36a) qui s'appuie sur la partie cylindrique (21) du fond de la gorge extérieure (20) de l'élément mâle (5).

18. Raccord selon l'une des revendications 1 à 17, caractérisé en ce qu'à une faible distance (a) de l'extrémité avant (l9) de l'élément femelle (A) est placé un joint annulaire (26) qui bouche l'interstice entre l'alésage récepteur (9) de l'élément femelle (A) et la surface périphérique de l'élément mâle (S), de préférence un joint torique placé dans une gorge (25) de l'élément mâle (S).

19. Raccord selon la revendication 18, caractérisé en ce que la distance (a) entre le joint annulaire (26) et l'extrémité avant (19) de l'élément femelle (A) est comprise entre 0 et 2,0 mm et de préférence d'environ 0,5 mm.

20. Raccord selon la revendication 19, caractérisé par une chambre d'étanchéité située dans la partie arrière (9b) de l'alésage récepteur (9) de l'élément femelle (A), formée par un élargissement de cet alésage (9) et obturée à l'arrière par un joint (17), de préférence par un joint torique placé dans une gorge (16) de l'élément mâle (S).

21. Raccord selon l'une des revendications précédentes, caractérisé en ce que, de façon connue, la profondeur d'engagement de la bague de fixation (H) dans la gorge extérieure (8) de l'élément femelle (A) et le diamètre intérieur du filetage extérieur (6) de l'élément femelle (A) sont accordés de façon que la bague de fixation (H), élargie au diamètre intérieur du filetage, s'engage encore dans la gorge extérieure (8) et que dans cette configuration dilatée, les doigts de fixation (32a à 32d) s'engagent encore dans la gorge extérieure (20) de l'élément mâle (S).

*Fig. 1*

_Fig.2_

EP 0 192 791 B1

_Fig. 3_

_Fig. 4_